# EUROPÄISCHE PATENTSCHRIFT

(11) **EP 2 489 906 B1**
(45) Veröffentlichungstag und Bekanntmachung des Hinweises auf die Patenterteilung: **02.04.2014**
(21) Anmeldenummer: 11001247.3
(22) Anmeldetag: 16.02.2011
(51) Int. Cl.: F16J 9/16, F16J 15/26, F16J 15/56

(54) **Kolbenscheibenanordnung und Spannelement dafür**
Piston disc assembly and tensioning element for same
Agencement de disque de piston et élément de serrage associé

(43) Veröffentlichungstag der Anmeldung: 22.08.2012
(73) Patentinhaber: Carl Freudenberg KG, 69469 Weinheim (DE)
(72) Erfinder: Barillas, Gonzalo, 36304 Alsfeld-Altenburg (DE)

(56) Entgegenhaltungen:
- NL-A- 7 203 961
- US-A- 5 009 519
- US-A- 5 474 307

## Beschreibung

### Technisches Gebiet

Die Erfindung betrifft eine Kolbenscheibenanordnung, umfassend zumindest eine ringförmige Kolbenscheibe, eine Stange und zwei Spannelemente, wobei die Kolbenscheibe und die Spannelemente die Stange außenumfangsseitig umschließen, wobei die Kolbenscheibe unter axialer Vorspannung axial zwischen den Spannelementen angeordnet ist und wobei die Kolbenscheibe zumindest eine sich in radialer Richtung erstreckende Stirnseite aufweist, die von einem sich im Wesentlichen in radialer Richtung erstreckenden Radialflansch des entsprechenden Spannelements anliegend berührt ist.

### Stand der Technik

Solche Kolbenscheibenanordnungen sind allgemein bekannt und gelangen als Komplettkolben zur Anwendung. Kolbenscheibenanordnungen sind z. B. in einem hohlzylinderförmigen Gehäuse angeordnet, wobei die Kolbenscheibenanordnung durch wechselseitige Druckbeaufschlagung der Kolbenscheibe innerhalb des Gehäuses in axialer Richtung hin- und herbewegt wird. Sowohl die Kolbenscheibe als auch die beiden Spannelemente, zwischen denen die Kolbenscheibe unter axialer Vorspannung angeordnet ist, sind im Wesentlichen rechtwinklig ausgebildet, wobei die einander zugewandten Stirnseiten von Kolbenscheibe und Spannelementen in einer Radialebene angeordnet sind. Insbesondere der rechtwinklige Übergang zwischen dem Radialflansch des Spannelements, der die Stirnseite der Kolbenscheibe anliegend berührt und der sich in axialer Richtung erstreckenden Außenumfangsfläche des Spannelements ist bezüglich der Dauerhaltbarkeit der Kolbenscheibenanordnung nachteilig. Während der bestimmungsgemäßen Verwendung der Kolbenscheibenanordnung entstehen unerwünscht hohe Spannungen Kerbwirkungen im Bereich der Kontaktzonen zwischen der Kolbenscheibe und den Spannelementen, insbesondere im Bereich der jeweiligen Außenumfänge der Spannelemente. Diese unerwünscht hohen Spannungen können zu Rissen in der Kolbenscheibe und/oder in den Spannelementen und/oder in der Stange führen, was im Hinblick auf eine gute Dauerhaltbarkeit und gleichbleibend gute Gebrauchseigenschaften der Kolbenscheibenanordnung während einer langen Gebrauchsdauer von Nachteil ist.

Aus der US 5,474,307 ist ein Kolben einer Verbrennungskraftmaschine bekannt, der außenumfangsseitig von Kompressionsringen und Ölabstreifringen umschlossen ist. Die Ringe sind - auch um montiert werden zu können - an einer Umfangsstelle durchtrennt und dadurch in ihrer radialen Weite elastisch veränderlich. Die Ringe sind in Nuten des Kolbens angeordnet, wobei die axiale Weite der Nuten größer ist als die axiale Höhe der Ringe. Dadurch ist sichergestellt, dass die Ringe, wie zuvor beschrieben, in radialer Richtung elastisch innerhalb der Nut beweglich sind; eine axiale Verpressung der Ringe durch die die Nut begrenzenden Wandungen erfolgt nicht.

### Darstellung der Erfindung

Der Erfindung liegt die Aufgabe zugrunde, eine Kolbenscheibenanordnung der eingangs genannten Art derart weiterzuentwickeln, dass unerwünscht hohe Spannungskonzentrationen zwischen der zumindest einen Kolbenscheibe und den Spannelementen zuverlässig vermieden werden. Die Spannungsverteilung auf den Oberflächen der einander berührenden Teile soll vergleichmäßigt sein. Eine spannungsbedingte Rissbildung soll vermieden werden. Die Kolbenscheibenanordnung soll eine gute Dauerhaltbarkeit und gleichmäßig gute Gebrauchseigenschaften während einer langen Gebrauchsdauer aufweisen. Darüber hinaus sollen die Kosten und das Gewicht der

### Darstellung der Erfindung

Der Erfindung liegt die Aufgabe zugrunde, eine Kolbenscheibenanordnung der eingangs genannten Art derart weiterzuentwickeln, dass unerwünscht hohe Spannungskonzentrationen zwischen der zumindest einen Kolbenscheibe und den Spannelementen zuverlässig vermieden werden. Die Spannungsverteilung auf den Oberflächen der einander berührenden Teile soll vergleichmäßigt sein. Eine spannungsbedingte Rissbildung soll vermieden werden. Die Kolbenscheibenanordnung soll eine gute Dauerhaltbarkeit und gleichmäßig gute Gebrauchseigenschaften während einer langen Gebrauchsdauer aufweisen. Darüber hinaus sollen die Kosten und das Gewicht der Kolbenscheibenanordnung durch die Reduktion von Spannungen verringert werden.

Diese Aufgabe wird erfindungsgemäß mit den Merkmalen von Anspruch 1 gelöst. Auf vorteilhafte Ausgestaltungen nehmen die auf Anspruch 1 rückbezogenen Ansprüche Bezug.

Zur Lösung der Aufgabe ist es vorgesehen, dass das Spannelement eine Außenumfangsfläche aufweist, die auf der der Kolbenscheibe axial zugewandten Seite in Form einer Kurve asymptotisch übergehend in den Radialflansch ausgebildet ist,

Die Außenumfangsfläche kann sich in axialer Richtung erstrecken.

Bei einer derartigen Ausgestaltung des Übergangs zwischen der Außenumfangsfläche des Spannelements und dessen Radialflansch ist von Vorteil, dass dieser kritische Bereich die dem Spannelement zugewandte Stirnseite der Kolbenscheibe mit vergleichsweise reduzierter Spannungskonzentration anliegend berührt. Die Gebrauchsdauer verringernden Spannungsspitzen, speziell im Bereich dieses Übergangs, die beispielsweise zu einer Überlastung in den Bauteilen der Kolbenscheibenanordnung führen könnten und damit zum Ausfall der gesamten Kolbenscheibenanordnung, sind durch eine solche Ausgestaltung auf ein Minimum reduziert.

Der asymptotische Übergang von der Außenumfangsfläche des Spannelements hin zur Radialebene, in der der Radialflansch des Spannelements liegt, ist hinsichtlich einer Vergleichmäßigung der Spannungsverteilung vorteilhafter, als wenn dieser Übergang zum Beispiel viertelkreisförmig ausgeführt wäre. Durch den asymptotischen Übergang sind die Spannungen zwischen den Oberflächen der einander berührenden Teile bestmöglich vergleichmäßigt.

Die asymptotisch ausgeführte Radialflanschfläche liegt an der zumindest einen Kolbenscheibe an.

Gemäß einer vorteilhaften Ausgestaltung ist es vorgesehen, dass die Kurve nach der Funktion y = arc tan(x) verläuft

Gemäß einer vorteilhaften Ausgestaltung kann es vorgesehen sein, dass beide Stirnseiten der zumindest einen Kolbenscheibe von jeweils einem Spannelement anliegend berührt sind, wobei jedes Spannelement eine Außenumfangsfläche aufweist und wobei beide Außenumfangsflächen jeweils auf der der Kolbenscheibe axial zugewandten Seite in Form einer Kurve asymptotisch übergehend in den jeweiligen Radialflansch ausgebildet sind. Unabhängig von der Seite der Druckbeaufschlagung der Kolbenscheibe werden unerwünscht hohe die Gebrauchsdauer verringemde Spannungsspitzen in den Bauteilen der Kolbenscheibenanordnung während des Gebrauchs verhindert.

Eines der Spannelemente ist bevorzugt einstückig ineinander übergehend und materialeinheitlich mit der Stange ausgebildet. In einem solchen Fall ist das eine Spannelement als Bund der Welle ausgebildet, so dass die Kolbenscheibenanordnung insgesamt nur noch drei Bauteile aufweist, nämlich die Stange mit dem einen einstückig ausgebildeten Spannelement, die zumindest eine Kolbenscheibe, die unter axialer Vorspannung an diesem Spannelement anliegt und das weitere Spannelement, das die Kolbenscheibe in ihrer Lage relativ zur Stange und dem mit der Stange verbundenen Spannelement fixiert, Die Kolbenscheibenanordnung ist durch die Verringerung von Spannungsspitzen aus einem günstigeren Werkstoff beziehungsweise mit geringerem Materialeinsatz einfach und kostengünstig herstellbar und einfach zu montieren. Die Gefahr von Montagefehlem ist auf ein Minimum reduziert. Die Kolbenscheibe und/oder die Spannelemente können aus einem metallischen Werkstoff oder aus einem Kunststoff bestehen. Metallische Werkstoffe sind für die beschriebene Anwendung besonders gut geeignet, weil sie, abhängig von der jeweiligen Verwendung der Kolbenscheibenanordnung, in unterschiedlichsten Spezifikationen kostengünstig verfügbar sind. Durch die Verringerung der Spannungen können auch Kunststoffe zum Einsatz kommen. Außerdem betrifft die Erfindung ein Spannelement zur Verspannung eines ringförmigen Maschinenelements auf einer Stange, wie zuvor beschrieben.

Die bisher bekannten Spannelemente waren kreisringförmig ausgebildet und sowohl im Bereich ihres Innenumfangs als auch im Bereich ihres Außenumfangs rechtwinklig in die beiden stirnseitigen Radialflansche übergehend ausgebildet. Diese rechtwinklige Ausgestaltung, insbesondere im Übergangsbereich zwischen einer sich in axialer Richtung erstreckenden Außenumfangsfläche und dem Radialflansch des Spannelements, mit dem dieser das zu verspannende Maschinenelement unter Vorspannung anliegend berührt, konnte bisher nur durch den Einsatz hochfester Werkstoffe verwirklicht werden. Der rechtwinklig ausgebildete Übergangsbereich zwischen der Außenumfangsfläche und dem Radialflansch hat zu unerwünscht hohen Spannungsspitzen während der Verwendung des Spannelements geführt, beispielsweise in einem Hydraulik- oder Pneumatikkolben, in dem das Spannelement zur Anwendung gelangt.

Der Erfindung liegt die Aufgabe zugrunde, ein Spannelement derart weiterzuentwickeln, dass unerwünscht hohe Spannungsspitzen bei der Verspannung eines ringförmigen Maschinenelements mittels des Spannelements verhindert werden.

Diese Aufgabe wird dadurch von einem Spannelement gelöst, das zur Verspannung eines ringförmigen Maschinenelements auf einer Stange vorgesehen ist, dass das Spannelement eine Außenumfangsfläche aufweist, die auf der dem zu verspannenden Maschinenelement axial zugewandten Seite in Form einer Kurve asymptotisch übergehend in den Radialflansch des Spannelements ausgebildet ist.

Wie zuvor bereits beschrieben, verläuft die Kurve bevorzugt nach der Funktion y = arc tan(x).

### Kurzbeschreibung der Zeichnung

Ein Ausführungsbeispiel der erfindungsgemäßen Kolbenscheibenanordnung mit dem erfindungsgemäßen Spannelement wird nachfolgend anhand der Fig. 1 bis 3 näher erläutert.

Die Fig. 1 bis 3 zeigen jeweils in schematischer Darstellung:
- Fig. 1: einen Ausschnitt aus einer Kolbenscheibenanordnung in geschnittener Darstellung,
- Fig. 2: den Ausschnitt "x" aus Fig. 1 in vergrößerter, nicht maßstäblicher Darstellung,
- Fig. 3: den Ausschnitt "y" aus Fig. 2 in vergrößerter, nicht maßstäblicher Darstellung.

### Ausführung der Erfindung

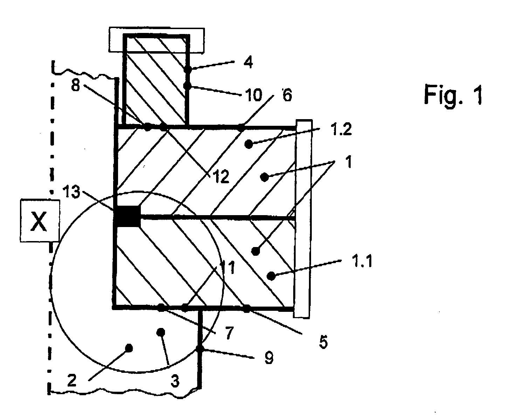

In Fig. 1 ist ein Ausschnitt aus einer erfindungsgemäßen Kolbenscheibenanordnung gezeigt. Die ringförmige Kolbenscheibe 1 ist zweiteilig ausgebildet und umfasst die Teil-Kolbenscheiben 1.1, 1.2, die in axialer Richtung gegeneinander verspannt sind. Die beiden Teil-Kolbenscheiben 1.1, 1.2 sind auf ihren einander axial zugewandten Innenseiten durch einen Dichtring 13 gegeneinander und gegenüber der Stange 2 abgedichtet.

Die beiden Spannelemente 3, 4 sind in dem hier gezeigten Ausführungsbeispiel voneinander abweichend gestaltet. Das Spannelement 3 bildet einen einstückigen Bestandteil der Stange 2 und ist als ein sich in radialer Richtung nach außen erstreckender Absatz in der Stange 2 ausgeführt. Das zweite Spannelement 4 ist demgegenüber separat erzeugt und kann beispielsweise durch eine Wellenmutter gebildet sein. Durch die Montage des zweiten Spannelements 4 auf der Stange 2 wird die axiale Vorspannung auf die Kolbenscheibe 1 aufgebracht.

Während der bestimmungsgemäßen Verwendung der Kolbenscheibenanordnung bewegt sich die Stange 2 zusammen mit der Kolbenscheibe 1 und den Spannelementen 3, 4 in axialer Richtung innerhalb eines hier nicht dargestellten Gehäuses hin und her. Die axiale Hin- und HerBewegung der Kolbenscheibenanordnung ist abhängig von der Richtung der Druckbeaufschlagung der Kolbenscheibe 1. Die Kolbenscheibe 1 ist axial beiderseits druckbeaufschlagbar.

Während der bestimmungsgemäßen Verwendung von Kolbenscheibenanordnungen, die Stand der Technik sind, befinden sich die Bereiche der größten Spannungen im Bereich der Berührung zwischen dem Außenumfang der Spannelemente und den Stirnseiten der Kolbenscheibe. Durch diese üblicherweise unerwünscht hohen Spannungen wird die Gebrauchsdauer der Kolbenscheibenanordnung reduziert und es können Risse in der Kolbenscheibe 1 und/oder der Stange 2 und/oder der Spannelemente 3, 4 entstehen. Um solche Risse zu vermeiden, ist der Einsatz hochfester Werkstoffe erforderlich.

Um diese üblichen Nachteile zu vermeiden, sind die Spannelemente 3, 4 erfindungsgemäß gestaltet.

Beide Spannelemente 3, 4 haben erfindungsgemäß jeweils eine Außenumfangsfläche 9, 10 und einen Radialflansch 7, 8, wobei die Radialflansche 7, 8 die jeweils axial benachbarten Stirnseiten 5, 6 der Kolbenscheibe 1 unter axialer Vorspannung anliegend berühren. Die Außenumfangsflächen 9, 10 der jeweiligen Spannelemente 3, 4 gehen jeweils in Form einer Kurve asymptotisch in entsprechende Radialebenen über. Durch diese besondere Form des Übergangs zwischen den Außenumfangsflächen 9, 10 und den jeweiligen Radialflanschen 7, 8 entsteht eine gleichmäßige Spannungsverteilung auf den Oberflächen der einander berührenden Teile, hier den Stirnseiten 5, 6 der Kolbenscheibe 1 und den Radialflanschen 7, 8 der Spannelemente 3, 4.

Es ist auch denkbar, dass diese Kontur auf der Stirnseite 5 und/oder 6 der Kolbenscheibe 1 abgebildet ist.

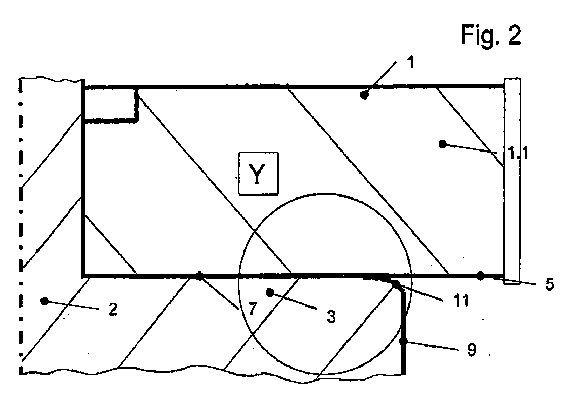

In Fig. 2 ist der Ausschnitt x aus Fig. 1 in vergrößerter Darstellung gezeigt. Es ist zu erkennen, wie die Außenumfangsfläche 9 in den Radialflansch 7 übergeht, wobei sich der radial äußere Bereich dieses Übergangs auch asymptotisch der Stirnseite 5 der Kolbenscheibe 1 annähert.

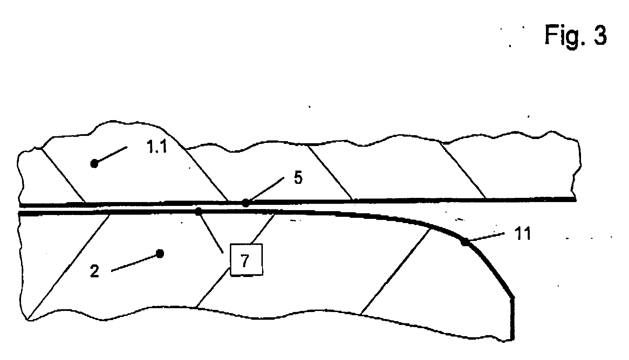

Die zeichnerische Darstellung ist im Vergleich zur Realität übertrieben. In Fig. 3 ist der Ausschnitt y aus Fig. 2 in vergrößerter Darstellung gezeigt.

Der asymptotische Übergang von der Außenumfangsfläche 9 in den Radialflansch 7 ergibt sich im hier darstellten Ausführungsbeispiel dadurch, dass der Übergangsbereich zunächst mit einer 45°-Fase versehen wird. Im nächsten Verfahrensschritt wird der Winkel, bezogen auf die sich in axialer Richtung erstreckende Außenumfangsfläche 10 stufenweise vergrößert, wobei die Stufen kleiner werden, je weiter der Winkel sich den 90° und somit der Erstreckung des Radialflansches 8 in der Radialebene nähert.

Der Kurvenverlauf entspricht einer arc tan(x)-Funktion.

## Patentansprüche

1. Kolbenscheibenanordnung, umfassend zumindest eine ringförmige Kolbenscheibe (1), eine Stange (2) und zwei Spannelemente (3, 4), wobei die Kolbenscheibe (1) und die Spannelemente (3, 4) die Stange (2) aussenumfangsseitig umschließen, wobei die Kolbenscheibe (1) unter axialer Vorspannung axial zwischen den Spannelementen (3, 4) angeordnet ist und wobei die Kolbenscheibe (1) zumindest eine sich in radialer Richtung erstreckende Stirnseite (5, 6) aufweist, die von einem sich im Wesentlichen in radialer Richtung erstreckenden Radialflansch (7, 8) des entsprechenden Spannelements (3, 4) anliegend berührt ist, **dadurch gekennzeichnet, dass** das Spannelement (3, 4) eine Außenumfangsfläche (9,10) aufweist, die auf der der Kolbenscheibe (1) axial zugewandten Seite in Form einer Kurve (11, 12) asymptotisch übergehend in den Radialflansch (7, 8) ausgebildet ist.

2. Kolbenscheibenanordnung nach Anspruch 1, **dadurch gekennzeichnet, dass** die Kurve (11, 12) nach der Funktion y = arc tan(x) verläuft.

3. Kolbenscheibenanordnung nach einem der Ansprüche 1 oder 2, **dadurch gekennzeichnet, dass** beide Stirnseiten (5, 6) der Kolbenscheibe (1) von jeweils einem Spannelement (3, 4) anliegend berührt sind und dass jedes Spannelement (3, 4) eine Außenumfangsfläche (9, 10) aufweist und dass beide Außenumfangsflächen (9, 10) jeweils auf der der Kolbenscheibe (1) axial zugewandten Seite in Form einer Kurve (11, 12) asymptotisch übergehend in den jeweiligen Radialflansch (7, 8) ausgebildet sind.

4. Kolbenscheibenanordnung nach einem der Ansprüche 1 bis 3, **dadurch gekennzeichnet, dass** eines der Spannelemente (3) einstöckig ineinander übergehend und materialeinheitlich mit der Stange (2) ausgebildet ist.

5. Kolbenscheibenanordnung nach einem der Ansprüche 1 bis 4, **dadurch gekennzeichnet, dass** die Kolbenscheibe (1) und/oder die Spannelemente (3, 4) aus einem metallischen Werkstoff oder aus einem Kunststoff bestehen.

6. Spannelement zur Verspannung eines ringförmigen Maschinenelements (1) auf einer Stange (2) nach einem der Ansprüche 1 bis 5, **dadurch gekennzeichnet, dass** das Spannelement (3, 4) eine Außenumfangsfläche (9, 10) aufweist, die auf der dem zu verspannenden Maschinenelement (1) axial zugewandten Seite in Form einer Kurve (11, 12) asymptotisch übergehend in den Radialflansch (7, 8) des Spannelements (3, 4) ausgebildet ist.

7. Spannelement nach Anspruch 6, **dadurch gekennzeichnet, dass** die Kurve (11, 12) nach der Funktion y = arc tan(x) verläuft.

## Claims

1. Piston disc arrangement, comprising at least one annular piston disc (1), a rod (2) and two clamping elements (3, 4), wherein the piston disc (1) and the clamping elements (3, 4) surround the rod (2) on the outer circumference, wherein the piston disc (1) is arranged axially with axial prestress between the clamping elements (3, 4), and wherein the piston disc (1) has at least one end side (5, 6) which extends in the radial direction and which is contacted by bearing against an essentially radially extending radial flange (7, 8) of the corresponding clamping element (3, 4), **characterized in that** the clamping element (3, 4) has an outer circumferential face (9, 10) which is formed on the side axially facing the piston disc (1), in the form of a curve (11, 12) which merges asymptotically with the radial flange (7, 8).

2. Piston disc arrangement according to Claim 1, **characterized in that** the curve (11, 12) extends in accordance with the function y = arc tan(x).

3. Piston disc arrangement according to one of Claims 1 and 2, **characterized in that** the two end sides (5, 6) of the piston disc (1) are contacted by bearing against one clamping element (3, 4) each, and **in that** each clamping element (3, 4) has an outer circumferential face (9, 10), and **in that** the two outer circumferential faces (9, 10) are each formed on the side axially facing the piston disc (1), in the form of a curve (11, 12) which merges asymptotically with the respective radial flange (7, 8).

4. Piston disc arrangement according to one of Claims 1 to 3, **characterized in that** one of the clamping elements (3) is embodied in such a way that it merges in one piece with the rod (2) in a materially uniform fashion.

5. Piston disc arrangement according to one of Claims 1 to 4, **characterized in that** the piston disc (1) and/or the clamping elements (3, 4) are composed of a metallic material or of a plastic.

6. Clamping element for clamping an annular machine element (1) on a rod (2) according to one of Claims 1 to 5, **characterized in that** the clamping element (3, 4) has an outer circumferential face (9, 10) which is formed on the side axially facing the machine element (1) to be clamped, in the form of a curve (11, 12) which merges asymptotically with the radial flange (7, 8) of the clamping element (3, 4).

7. Clamping element according to Claim 6, **characterized in that** the curve (11, 12) extends in accordance with the function y = arc tan(x).

## Revendications

1. Agencement de disque de piston comportant au moins un disque de piston annulaire (1), une tige (2) et deux éléments de serrage (3, 4), le disque de piston (1) et les éléments de serrage (3, 4) entourant la tige (2) du côté périphérique extérieur, le disque de piston (1) étant disposé, sous précontrainte axiale, axialement entre les éléments de serrage (3, 4) et le disque de piston (1) comprenant au moins un côté frontal (5, 6) s'étendant dans la direction radiale, lequel côté frontal est en contact étroit avec un rebord radial (7, 8), s'étendant essentiellement dans la direction radiale, de l'élément de serrage correspondant (3, 4), **caractérisé en ce que** l'élément de serrage (3, 4) comprend une surface périphérique extérieure (9, 10) qui est réalisée, du côté tourné axialement vers le disque de piston (1), sous la forme d'une courbe (11, 12) se prolongeant de manière asymptotique dans le rebord radial (7, 8).

2. Agencement de disque de piston selon la revendication 1, **caractérisé en ce que** la courbe (11, 12) s'étend suivant la fonction y = arc tan(x).

3. Agencement de disque de piston selon l'une quelconque des revendications 1 et 2, **caractérisé en ce que** les deux côtés frontaux (5, 6) du disque de piston (1) sont respectivement en contact étroit avec un élément de serrage (3, 4) et **en ce que** chaque élément de serrage (3, 4) comprend une surface périphérique extérieure (9, 10) et **en ce que** les deux surfaces périphériques extérieures (9, 10) sont réalisées respectivement, du côté tourné axialement vers le disque de piston (1), sous la forme d'une courbe (11, 12) se prolongeant de manière asymptotique dans le rebord radial (7, 8) respectif.

4. Agencement de disque de piston selon l'une quelconque des revendications 1 à 3, **caractérisé en ce que** l'un des éléments de serrage (3) est réalisé en le même matériau que celui de la tige (2) et de manière à se prolonger d'un seul tenant dans celle-ci.

5. Agencement de disque de piston selon l'une quelconque des revendications 1 à 4, **caractérisé en ce que** le disque de piston (1) et/ou les éléments de serrage (3, 4) est/sont constitué(s) d'un matériau métallique ou d'un plastique.

6. Élément de serrage pour le serrage d'un élément de machine annulaire (1) sur une tige (2) selon l'une quelconque des revendications 1 à 5, **caractérisé en ce que** l'élément de serrage (3, 4) comprend une surface périphérique extérieure (9, 10) qui est réalisée, du côté tourné axialement vers l'élément de machine (1) devant être serré, sous la forme d'une courbe (11, 12) se prolongeant de manière asymptotique dans le rebord radial (7, 8) de l'élément de serrage (3, 4).

7. Élément de serrage selon la revendication 6, **caractérisé en ce que** la courbe (11, 12) s'étend suivant la fonction y = arc tan(x).
